# EUROPEAN PATENT APPLICATION

(11) **EP 4 787 007 A1**
(43) Date of publication of application: **05.08.2026**
(21) Application number: 26151871.6
(22) Date of filing: 14.01.2026
(51) Int. Cl.: G01S 5/00, G01S 5/16, G06V 20/52

(54) **POSITION DETECTION SYSTEM, POSITION DETECTION APPARATUS, POSITION DETECTION METHOD, POSITION DETECTION PROGRAM, AND METHOD FOR MANUFACTURING MOBILE BODY**

(30) Priority: 03.02.2025 JP 2025016273
(71) Applicant: Toyota Jidosha Kabushiki Kaisha, Toyota-shi, Aichi-ken 471-8571 (JP)
(72) Inventor: NAGAFUCHI, Yuhei, Toyota-shi, 471-8571 (JP)
(74) Representative: D Young & Co LLP

(57) **Abstract**

A position detection system, a position detection apparatus, a position detection method, a position detection program, and a method for manufacturing a mobile body capable of improving an accuracy of position detection are provided. The position detection system according to the present disclosure includes an observation information acquisition unit (211), a position information detection unit (212), an environmental change information acquisition unit (213), and a detection accuracy evaluation unit (215). The observation information acquisition unit (211) acquires observation information, which is a result of observing a movement area where a mobile body moves. The position information detection unit (212) detects position information of the mobile body based on the observation information. The environmental change information acquisition unit (213) acquires environmental change information regarding a change in an environment of the movement area. The detection accuracy evaluation unit (215) evaluates an accuracy of detecting the position information based on the environmental change information, and outputs an evaluation result.

## Description

### BACKGROUND

The present disclosure relates to a position detection system, a position detection apparatus, a position detection method, a position detection program, and a method for manufacturing a mobile body.

Patent Literature 1 discloses an azimuth angle acquisition apparatus. The azimuth angle acquisition apparatus disclosed in Patent Literature 1 acquires an azimuth angle of a mobile body based on an external state, which is a motion state of the mobile body detected from the external world and an internal motion state, which is a motion state of the mobile body detected from the internal world.

[Patent Literature 1] Japanese Patent No. 7388589

### SUMMARY

Meanwhile, in a case where position information of a mobile body is detected using a camera, a Lidar or the like, like in the technique disclosed in Patent Literature 1, it is possible that an accuracy of detecting the mobile body may be decreased due to a change in an environment near an area in which the mobile body moves.

When the accuracy of detecting the mobile body is decreased, it is required to take appropriate measures. However, it is not easy to determine whether or not the detection accuracy has decreased to a level requiring actual countermeasures. For example, it is possible that measures to improve detection accuracy may be taken although the detection accuracy is not actually decreased, which is not desirable.

That is, there is a problem in related art that it is impossible to sufficiently evaluate the accuracy of detecting the mobile body, which causes a decrease in the accuracy of position detection.

Patent Literature 1 does not disclose any technique for solving the aforementioned problem.

The present disclosure has been made in order to solve the aforementioned problem, and an object of the present disclosure is to provide a position detection system, a position detection apparatus, a position detection method, a position detection program, and a method for manufacturing a mobile body capable of improving an accuracy of position detection.

A position detection system according to the present disclosure includes an observation information acquisition unit, a position information detection unit, an environmental change information acquisition unit, and a detection accuracy evaluation unit. The observation information acquisition unit acquires observation information, which is a result of observing a movement area where a mobile body moves. The position information detection unit detects position information of the mobile body based on the observation information. The environmental change information acquisition unit acquires environmental change information regarding a change in an environment of the movement area. The detection accuracy evaluation unit evaluates the accuracy of detecting the position information based on the environmental change information and outputs an evaluation result.

The position detection system according to the present disclosure may further include a simulation unit configured to create simulation data of the observation information by simulating the movement area after the environment has been changed and the mobile body that moves in the movement area based on the environmental change information. Then the detection accuracy evaluation unit evaluates the accuracy of detecting the position information by referring to position information of the mobile body detected based on the simulation data.

The position detection system according to the present disclosure may further include a notification unit configured to notify a user of a result of evaluating the accuracy of detecting the position information.

The position detection system according to the present disclosure may further include a movement control unit configured to control movement of the mobile body based on the position information and a result of evaluating the accuracy of detecting the position information.

In the position detection system according to the present disclosure, when the result of evaluating the accuracy of detecting the position information does not satisfy a predetermined condition, the movement control unit may stop movement of the mobile body.

In the position detection system according to the present disclosure, the position information detection unit may detect position information of the mobile body by inputting the acquired observation information to an artificial intelligence model that outputs position information of the mobile body by using the observation information as input information.

The position detection system according to the present disclosure may further include a training unit that trains artificial intelligence model. Then the training unit may determine a training frequency based on the result of evaluating the accuracy of detecting the position information.

In the position detection system according to the present disclosure, the environmental change information acquisition unit may acquire a plan for changing a layout of the movement area as the environmental change information.

In the position detection system according to the present disclosure, the environmental change information acquisition unit may detect the change in the environment of the movement area based on the observation information.

A position detection apparatus according to the present disclosure includes an observation information acquisition unit, a position information detection unit, an environmental change information acquisition unit, and a detection accuracy evaluation unit. The observation information acquisition unit acquires observation information, which is a result of observing a movement area where a mobile body moves. The position information detection unit detects position information of the mobile body based on the observation information. The environmental change information acquisition unit acquires environmental change information regarding a change in an environment of the movement area. The detection accuracy evaluation unit evaluates the accuracy of detecting the position information based on the environmental change information and outputs an evaluation result.

A position detection method according to the present disclosure includes: acquiring observation information, which is a result of observing a movement area where a mobile body moves; detecting position information of the mobile body based on the observation information; acquiring environmental change information regarding a change in an environment of the movement area; and evaluating an accuracy of detecting the position information based on the environmental change information.

A position detection program according to the present disclosure causes a computer to execute an operation including: acquiring observation information, which is a result of observing a movement area where a mobile body moves; detecting position information of the mobile body based on the observation information; acquiring environmental change information regarding a change in an environment of the movement area; and evaluating an accuracy of detecting the position information based on the environmental change information.

A method for manufacturing a mobile body according to the present disclosure includes: acquiring observation information, which is a result of observing a movement area where a mobile body moves; detecting position information of the mobile body based on the observation information; acquiring environmental change information regarding a change in an environment of the movement area; evaluating an accuracy of detecting the position information based on the environmental change information; and controlling the mobile body, based on the detected position information and a result of evaluating the accuracy of detecting the position information, in such a way that the mobile body moves to a predetermined position where a next manufacturing process is performed.

According to the present disclosure, it is possible to provide a position detection system, a position detection apparatus, a position detection method, a position detection program, and a method for manufacturing a mobile body capable of improving an accuracy of position detection.

The above and other objects, features and advantages of the present disclosure will become more fully understood from the detailed description given hereinbelow and the accompanying drawings.

### BRIEF DESCRIPTION OF DRAWINGS

Fig. 1 is a schematic overview diagram showing a configuration of a mobile body control system according to a first embodiment;
Fig. 2 is a block diagram showing a configuration of a server according to the first embodiment;
Fig. 3 is a block diagram showing a configuration of the server according to the first embodiment;
Fig. 4 is a flowchart showing an operation of the server according to the first embodiment;
Fig. 5 is a flowchart showing an operation of the server according to the first embodiment;
Fig. 6 is a block diagram showing a configuration of a server according to a second embodiment; and
Fig. 7 is a flowchart showing an operation of the server according to the second embodiment.

### DESCRIPTION OF EMBODIMENTS

### <First Embodiment>

### (Configuration of Position Detection System)

Hereinafter, with reference to the drawings, a first embodiment according to the present disclosure will be described in detail. First, a configuration of a position detection system according to this embodiment will be described in detail.

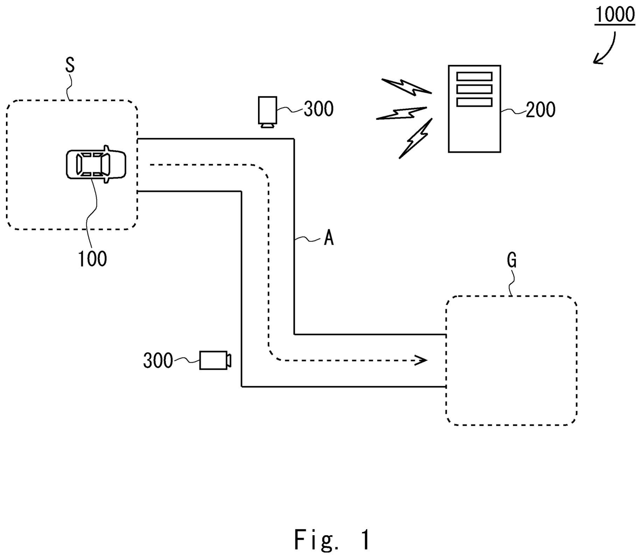

Fig. 1 is a schematic overview diagram showing a configuration of a mobile body control system according to the first embodiment.

A mobile body control system 1000 according to this embodiment detects a position of a mobile body and controls an operation of the mobile body based on the detected position information. More specifically, the mobile body control system 1000 according to this embodiment detects position information of the mobile body using the position detection system according to this embodiment, and controls an operation of the mobile body based on the detected position information.

That is, the position detection system according to this embodiment is implemented as a part of the mobile body control system 1000.

In the present disclosure, the "mobile body" means an object that may move, and may be, for example, a vehicle or an electric vertical take-off and landing aircraft (a so-called flying automobile). The vehicle may be a vehicle including wheels or a vehicle with an endless track, and may be, for example, a passenger vehicle, a truck, a bus, a two-wheeled vehicle, a four-wheeled vehicle, a tank, or a construction vehicle. The vehicle includes an electric automobile (BEV: Battery Electric Vehicle), a gasoline automobile, a hybrid automobile, or a fuel cell automobile. Note that, when the mobile body is other than a vehicle, the terms "vehicle" and "car" in the present disclosure can be replaced by a "mobile body" as appropriate, and the term "travel" can be replaced by "move" as appropriate.

For example, a mobile body control system 1000 according to this embodiment controls the operation of the vehicle 100 shown in Fig. 1, and moves the vehicle 100 from a starting point S to a target point G. Further specifically, the mobile body control system 1000 according to this embodiment moves the vehicle 100 from the starting point S to the target point G by causing the vehicle 100 to travel in a movement area A.

Note that the movement area in the present disclosure indicates an area where a mobile body including the vehicle 100 may be present or pass. The movement area A according to this embodiment is observed by an external sensor 300 that will be described later.

For example, the mobile body control system 1000 may be used to transport a plurality of vehicles manufactured in a vehicle manufacturing factory to a yard. Further, the mobile body control system 1000 may be used to load the plurality of vehicles onto a ship or a freight train. The mobile body control system 1000 may also be used to cause vehicles in an unfinished state to move in a form of a platoon in a vehicle manufacturing factory.

While the details will be described later, the mobile body control system according to the present disclosure evaluates a change in the environment in the movement area. Therefore, the mobile body control system according to the present disclosure achieves special effects as it is used for travel control in a vehicle manufacturing factory and the like where changes in the environment due to a change in the layout or the like is likely to occur.

The mobile body control system 1000 according to this embodiment includes a server 200 and an external sensor 300.

In the mobile body control system 1000, the server 200 acquires observation information of the movement area A from the external sensor 300 and detects position information of the vehicle 100 based on the observation information. Then the server 200 controls an operation of the vehicle 100 based on the detected position information.

Therefore, the position detection system according to this embodiment is configured as the server 200. That is, the position detection system according to this embodiment is implemented by a computer configured as a single apparatus. However, the configuration of the position detection system according to the present disclosure is not limited to the aforementioned one, and may be composed of two or more apparatuses.

The external sensor 300 is a sensor that is provided outside the vehicle 100. The external sensor 300 includes a communication apparatus and can communicate with other apparatuses such as the server 200 and so on by wired communication or wireless communication.

More specifically, the external sensor 300 according to this embodiment is a sensor that observes the movement area A where the mobile body moves. The external sensor 300 transmits observation information, which corresponds to observation results of the movement area A, to the server 200.

Specifically, the external sensor 300 is composed of a camera. The camera as the external sensor 300 captures an image of the movement area A, and outputs the captured image as observation information.

However, the external sensor 300 according to this embodiment is not limited to a camera, and may instead be, for example, a Light Detection And Ranging (LiDAR). In this case, detection results output from the external sensor 300 may be three-dimensional point cloud data of the movement area A.

That is, the external sensor 300 according to this embodiment may be any sensor as long as it can output information that is available for detecting the vehicle position information by observing the movement area A.

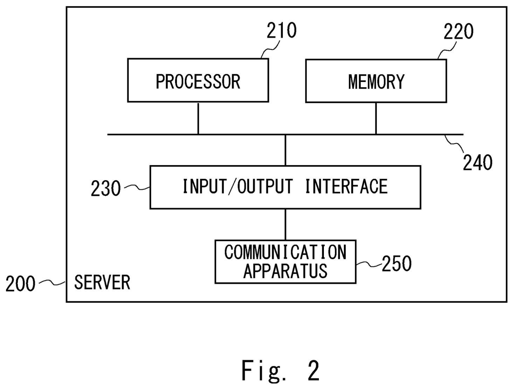

Fig. 2 is a block diagram showing a configuration of the server according to the first embodiment.

The server 200 is composed of a computer including a processor 210, a memory 220, an input/output interface 230, and an internal bus 240.

The processor 210, the memory 220, and the input/output interface 230 are connected to one another via the internal bus 240 in such a way that they can communicate with one another.

A communication apparatus 250 for communicating with various kinds of apparatuses provided outside the server 200 is connected to the input/output interface 230.

The communication apparatus 250 can communicate with the vehicle 100 by wireless communication and can communicate with each of the external sensors 300 by wired communication or wireless communication.

The processor 210 executes a program stored in the memory 220, thereby implementing various functions including functions as an observation information acquisition unit 211, a position information detection unit 212, an environmental change information acquisition unit 213, a simulation unit 214, a detection accuracy evaluation unit 215, a notification unit 216, and a movement control unit 217.

The program can be stored and provided to a computer using any type of non-transitory computer readable media. Non-transitory compute readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

The observation information acquisition unit 211 acquires observation information, which corresponds to results of observing a movement area where a mobile body moves. That is, the observation information acquisition unit 211 acquires observation information, which corresponds to the observation results of the movement area A where the vehicle 100 travels, from the external sensor 300. The observation information acquisition unit 211 outputs the acquired observation information to the position information detection unit 212.

The observation information here is information obtained as a result of observing the movement area A by the external sensor 300. The observation information may be data itself observed by the external sensor 300, that is, raw data, or may be data obtained by performing preprocessing or the like on raw data.

When, for example, the external sensor 300 is a camera, the observation information is a captured image obtained by capturing an image of the movement area A. Further, when the external sensor 300 is a LiDAR, the observation information is three-dimensional point cloud data of the movement area A.

The observation information includes observation results regarding the movement area A and observation results regarding a vehicle 100 that moves in the movement area A. To put it simply, when the external sensor 300 is a camera, the captured image obtained as the observation information includes an area which shows the appearance of the movement area A and an area which shows the vehicle 100 that moves in the movement area A.

While the details will be described later, the server 200 according to this embodiment detects the position of the vehicle 100 by extracting the observation results regarding the vehicle 100 that moves in the movement area A from the observation information. To put it simply, when the external sensor 300 is a camera, the server 200 according to this embodiment extracts the area which shows the vehicle 100 that moves in the movement area A from the captured image.

The accuracy of extracting the observation results regarding the vehicle 100 also depends on the observation results regarding the movement area A. Therefore, while the details will be described later, the position detection system according to this embodiment evaluates a change in the observation results regarding the movement area A, that is, a change in the environment of the movement area A.

The position information detection unit 212 acquires observation information from the observation information acquisition unit 211. The position information detection unit 212 detects position information of the mobile body based on the observation information.

More specifically, the position information detection unit 212 detects the exterior of the vehicle 100 from the captured image acquired as the observation information, and calculates coordinates of measurement points of the vehicle 100 in a coordinate system in the captured image, that is, in a local coordinate system. The position information detection unit 212 detects position information of the vehicle 100 by converting the calculated local coordinates into coordinates in a global coordinate system. That is, the position information detection unit 212 according to this embodiment extracts, from the captured image acquired as the observation information, the area which shows the vehicle 100.

For example, the exterior of the vehicle 100 included in the captured image may be detected by inputting the captured image into a detection model which uses artificial intelligence.

That is, the position information detection unit 212 according to this embodiment may detect position information of the mobile body by inputting the acquired observation information to the artificial intelligence model that outputs position information of the mobile body by using observation information as input information.

The detection model may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset has, for example, a plurality of training images including the vehicle 100 and a label indicating whether each area in the training image is an area which shows the vehicle 100 or an area which shows an object other than the vehicle 100. When CNN learning is performed, parameters of the CNN are preferably updated in such a way that the error between the results of the output by the detection model and the label is reduced by a back propagation method. Further, the position information detection unit 212 is able to acquire the orientation of the vehicle 100 by estimating it based on the direction of the moving vector of the vehicle 100 calculated from changes in positions of feature points of the vehicle 100 between frames of the captured image using an optical flow method.

Note that the accuracy of detecting the position of the vehicle 100 using the artificial intelligence is affected by an image area corresponding to an object other than the vehicle 100 included in the captured image, that is, an image area corresponding to the movement area A. Therefore, the position detection system according to this embodiment achieves special effects when position detection that uses artificial intelligence is performed.

The environmental change information acquisition unit 213 acquires environmental change information regarding a change in the environment of the movement area A. The environmental change information acquisition unit 213 outputs the acquired environmental change information to the simulation unit 214.

The change in the environment of the movement area here indicates a change in the environment which shows an influence of this change on the results of observation by the external sensor 300. That is, the change in the environment of the movement area here indicates a change affecting the observation results regarding the movement area A included in the observation information.

Therefore, when the external sensor 300 is a sensor that observes the appearance of the movement area, the environmental change information is information indicating the change in the appearance of the movement area. Further, when the external sensor 300 is a sensor that observes a spatial shape of the movement area, the environmental change information is information indicating the change in the spatial shape of the movement area.

The environmental change information may be, for example, information for predicting the change in the environment of the movement area, information for specifying a plan for changing the environment of the movement area, or information obtained by observing the movement area after the environment has been changed.

For example, the environmental change information acquisition unit 213 may acquire a plan for changing the layout of the movement area as environmental change information. In this case, the environmental change information corresponds to information for specifying the plan for changing the environment of the movement area. The environmental change information acquisition unit 213 may further acquire observation information as the environmental change information. In this case, the environmental change information corresponds to information obtained by observing the movement area after the environment has been changed.

Further, the environmental change information acquisition unit 213 may detect the change in the environment of the movement area based on the observation information. In this case, the environmental change information acquisition unit 213 acquires the observation information from the observation information acquisition unit 211. Then the acquired observation information may be compared with the observation information before the environment changes, and the results of the comparison may be acquired as the environmental change information.

While the details will be described later, the position detection system according to this embodiment evaluates the position detection accuracy of the vehicle 100 that varies due to a change in the environment of the movement area. Therefore, the environmental change information may be any kind of information as long as it can be used to evaluate the position detection accuracy.

The simulation unit 214 acquires environmental change information from the environmental change information acquisition unit 213. The simulation unit 214 creates simulation data of the observation information by simulating the movement area A after the environment has been changed and the vehicle 100 traveling in the movement area A based on the environmental change information.

The simulation unit 214 according to this embodiment first creates the simulation data of the movement area A after the environment has been changed based on the environmental change information.

Next, the simulation unit 214 creates simulation data of the observation information by arranging simulation data of the vehicle 100 having predetermined coordinates in the simulation data of the movement area A that has been created.

The simulation unit 214 labels the simulation data of the observation information with coordinates indicating the position of the vehicle 100, and outputs the labeled simulation data to the detection accuracy evaluation unit 215.

The detection accuracy evaluation unit 215 evaluates the accuracy of detecting the position information based on the environmental change information and outputs the evaluation results. More specifically, the detection accuracy evaluation unit 215 according to this embodiment evaluates the accuracy of detecting the position information based on the simulation data output based on the environmental change information. The detection accuracy evaluation unit 215 outputs the results of evaluating the accuracy of detection to the notification unit 216 and the movement control unit 217.

According to the above-described configuration, the position detection system according to this embodiment can appropriately evaluate the accuracy of detecting the position information. As a result, with the position detection system according to this embodiment, the accuracy of detecting the position information can be improved.

More specifically, the detection accuracy evaluation unit 215 according to this embodiment acquires, from the simulation unit 214, simulation data of the observation information and coordinates labeled with this observation data.

The detection accuracy evaluation unit 215 outputs the acquired simulation data to the position information detection unit 212, and causes the position information of the vehicle 100 to be output based on the simulation data. The detection accuracy evaluation unit 215 then evaluates the accuracy of detecting the position information by comparing the position information output from the position information detection unit 212 based on the simulation data with coordinate information labeled with the simulation data.

That is, the detection accuracy evaluation unit 215 according to this embodiment evaluates the accuracy of detecting the position information by referring to the position information of the mobile body detected based on the simulation data.

However, the configuration in which the detection accuracy evaluation unit 215 evaluates the accuracy of detecting the position information is not limited to the above-described configuration. The detection accuracy evaluation unit 215 according to this embodiment may have any configuration as long as the accuracy of detecting the position information can be appropriately evaluated.

For example, the detection accuracy evaluation unit 215 may acquire environmental change information from the environmental change information acquisition unit 213 and evaluate the extent to which the environment in the movement area A has changed. Then the detection accuracy evaluation unit 215 may evaluate the accuracy of detecting the position information based on the extent to which the environment in the movement area A has changed. In this case, the simulation unit 214 provided in the server 200 is not absolutely necessary.

The notification unit 216 acquires the results of evaluating the accuracy of detecting the position information from the detection accuracy evaluation unit 215. The notification unit 216 notifies the user of the results of evaluating the accuracy of detecting the position information.

Note that the notification unit 216 may be configured to periodically notify the user of the evaluation results, notify the user of the evaluation results in response to a request from the user, or may notify the user of the evaluation results when the evaluation results satisfy predetermined conditions.

According to the above-described configuration, the position detection system according to this embodiment can let the user know the accuracy of detecting the position information.

The movement control unit 217 acquires position information from the position information detection unit 212, and acquires results of evaluating the detection accuracy from the detection accuracy evaluation unit 215. The movement control unit 217 controls movement of the mobile body based on the position information and the results of evaluating the accuracy of detecting the position information.

For example, the movement control unit 217 may decrease the speed of the vehicle 100 when it is evaluated that the accuracy of detecting the position information is low. Further, the movement control unit 217 may stop traveling of the vehicle 100 when the results of evaluating the accuracy of detecting the position information do not satisfy predetermined conditions.

According to the above-described configuration, with the position detection system according to this embodiment, the accuracy of the travel control of the vehicle 100 can be improved.

Hereinafter, an aspect in which the movement control unit 217 after acquiring the position information controls the movement of the vehicle 100 will be described in more detail.

The movement control unit 217 determines the target position that the vehicle 100 should go next. The target position is expressed, for example, by coordinates of X, Y, and Z in a global coordinate system. The movement control unit 217 stores a reference route, which is a route along which the vehicle 100 should travel, in advance. The route is expressed by a node indicating the departure place, nodes indicating passage points, a node that indicates the target position, and a link connecting the respective nodes. The movement control unit 217 determines the target position that the vehicle 100 should go next using the vehicle position information and the reference route. The movement control unit 217 determines the target position on the reference route which is ahead of the current position of the vehicle 100.

The movement control unit 217 generates a travel control signal for causing the vehicle 100 to travel toward the determined target position. The movement control unit 217 calculates the traveling speed of the vehicle 100 from the transition of the position of the vehicle 100 and compares the calculated traveling speed with the target speed.

In general, when the traveling speed is lower than the target speed, the movement control unit 217 determines the acceleration in such a way that the vehicle 100 accelerates. On the other hand, when the traveling speed is higher than the target speed, the movement control unit 217 determines the acceleration in such a way that the vehicle 100 decelerates.

Further, when the vehicle 100 is positioned on the reference route, the movement control unit 217 determines the steering angle and the acceleration to prevent the vehicle 100 from being deviated from the reference route . On the other hand, when the vehicle 100 is not positioned on the reference route, i.e., when the vehicle 100 is deviated from the reference route, the movement control unit 217 determines the steering angle and the acceleration in such a way that the vehicle 100 returns onto the reference route.

The movement control unit 217 transmits the generated travel control signal to the vehicle 100. The movement control unit 217 repeats, in a predetermined cycle, acquisition of the position of the vehicle 100, determination of the target position, generation of the travel control signal, and transmission of the travel control signal, and the like.

The vehicle 100 receives the travel control signal transmitted from the server 200. The vehicle 100 controls the actuators using the received travel control signal, thereby causing the vehicle 100 to travel at an acceleration and a steering angle indicated in the travel control signal. The vehicle 100 repeats reception of the travel control signal and control of the actuators in a predetermined cycle.

### (Operation of Position Detection System)

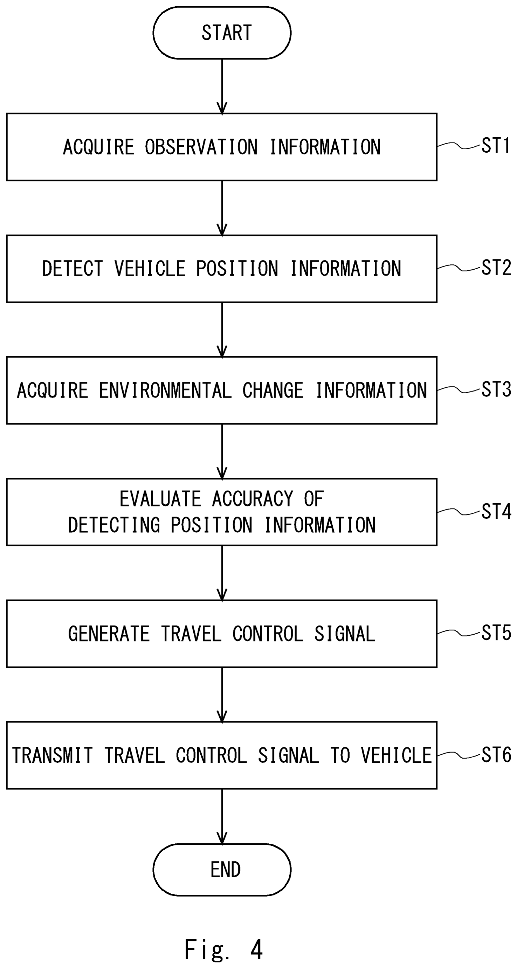

Next, an operation of the position detection system, that is, a position detection method according to the first embodiment will be described in detail. Fig. 4 is a flowchart showing the operation of the position detection system according to the first embodiment. In the following description, Figs. 1-3 are referred to as appropriate.

In the processing procedure shown in Fig. 4, the processor 210 of the server 200 loads a program stored in the memory 220 and executes the loaded program, thereby functioning as the observation information acquisition unit 211, the position information detection unit 212, the environmental change information acquisition unit 213, the simulation unit 214, the detection accuracy evaluation unit 215, the notification unit 216, and the movement control unit 217.

In the position detection system according to this embodiment, first, the processor 210 acquires observation information (Step ST1). That is, in Step ST1, the processor 210 functions as the observation information acquisition unit 211.

More specifically, the processor 210 acquires the observation information detected by the external sensor 300 and transmitted to the server 200 via the communication apparatus.

Next, the processor 210 detects vehicle position information (Step ST2). That is, in Step ST2, the processor 210 functions as the position information detection unit 212.

More specifically, in Step ST2, the processor 210 detects the exterior of the vehicle 100 from the captured image and calculates coordinates of measurement points of the vehicle 100 in the local coordinate system. Then the processor 210 detects the position information of the vehicle 100 by converting the calculated local coordinates into coordinates in the global coordinate system.

Next, the processor 210 detects environmental change information (Step ST3). That is, in Step ST3, the processor 210 functions as the environmental change information acquisition unit 213.

For example, in Step ST3, the processor 210 may acquire observation information from the external sensor 300 as the environmental change information.

Further, in Step ST3, the processor 210 may acquire a plan for changing the layout of the movement area from an external system as the environmental change information.

Next, the processor 210 evaluates the accuracy of detecting the position information (Step ST4).

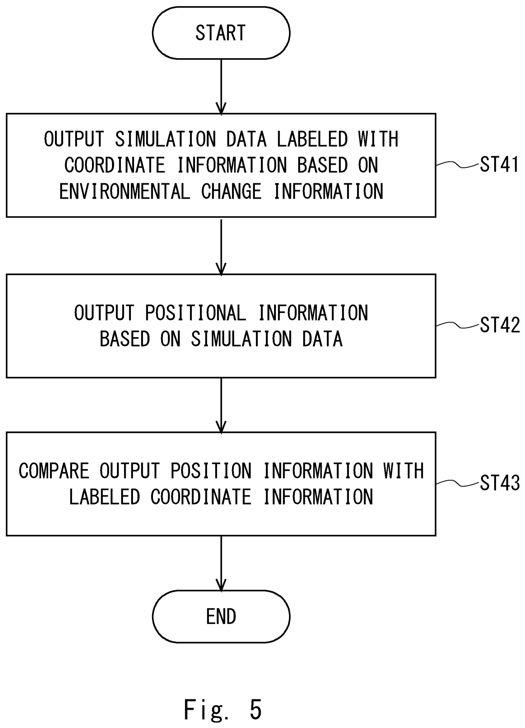

Fig. 5 is a flowchart for describing an operation of the processor 210 in Step ST4 in more detail.

In Step ST4, first, the processor 210 creates simulation data labeled with the coordinate information based on the environmental change information (Step ST41). That is, in Step ST41, the processor 210 functions as the simulation unit 214.

More specifically, in Step ST41, the processor 210 creates, based on the environmental change information, simulation data of the movement area A after the environment has been changed. Then the processor 210 creates simulation data of the observation information by arranging simulation data of the vehicle 100 having predetermined coordinates in the simulation data of the movement area A that has been created. Last, the processor 210 labels coordinates showing the position of the vehicle 100 with the simulation data of the observation information that has been output.

Next, in Step ST4, the processor 210 outputs positional information based on the simulation data (Step ST42). That is, in Step ST42, the processor 210 functions as the position information detection unit 212.

In Step ST4, the processor 210 next compares the output position information with the labeled coordinate information (Step ST43). That is, in Step ST43, the processor 210 functions as the detection accuracy evaluation unit 215.

With reference once again to Fig. 4, a continued description will be made.

Next, the processor 210 generates a travel control signal (Step ST5). That is, in Step ST5, the processor 210 functions as the movement control unit 217.

More specifically, in Step ST5, the processor 210 determines the acceleration and the steering angle of the vehicle 100, and generates a travel control signal which records the acceleration and the steering angle that have been determined.

In Step ST5, the processor 210 calculates the traveling speed of the vehicle 100 from the transition of the position of the vehicle 100, and compares the calculated traveling speed with the target speed.

Further, when the traveling speed is lower than the target speed, the processor 210 determines the acceleration in such a way that the vehicle 100 accelerates. On the other hand, when the traveling speed is higher than the target speed, the processor 210 determines the acceleration in such a way that the vehicle 100 decelerates.

Further, when the vehicle 100 is positioned on the reference route RR, the processor 210 determines the steering angle and the acceleration to prevent the vehicle 100 from being deviated from the reference route. On the other hand, when the vehicle 100 is not positioned on the reference route, i.e., when the vehicle 100 is deviated from the reference route, the processor 210 determines the steering angle and the acceleration in such a way that the vehicle 100 returns onto the reference route.

Last, the processor 210 transmits the travel control signal to the vehicle (Step ST6), and the server 200 ends the series of operations. In Step ST6, the processor 210 functions as the movement control unit 217. The server 200 repeats the operation from Step ST1 to Step ST6 in a predetermined cycle.

As described above, the position detection system according to this embodiment evaluates the accuracy of detecting the position information based on the environmental change information, and outputs the evaluation results.

According to the above-described configuration, the position detection system according to this embodiment can appropriately evaluate the accuracy of detecting the position information, and can improve the accuracy of detecting the position information as a result of the evaluation.

Further, the position detection system according to this embodiment reflects the output evaluation results in travel control of the vehicle 100.

According to the above-described configuration, the position detection system according to this embodiment can improve the accuracy of travel control of the vehicle 100.

Further, the position detection system according to this embodiment notifies the user of the output evaluation results.

According to the above-described configuration, the position detection system according to this embodiment can let the user know the accuracy of detecting the position information.

### <Second Embodiment>

### (Configuration of Position Detection System)

Hereinafter, with reference to the drawings, a second embodiment according to the present disclosure will be described in detail. First, a configuration of a position detection system according to this embodiment will be described in detail.

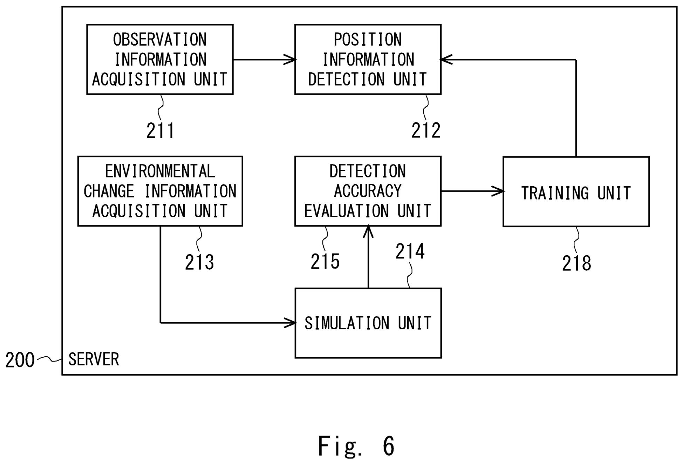

Fig. 6 is a block diagram showing a configuration of a server according to the second embodiment.

The position detection system according to this embodiment is different from the position detection system according to the first embodiment in that the position detection system according to this embodiment includes a training unit 218, and the other configurations of this embodiment are the same as those of the first embodiment.

Note that the server 200 according to this embodiment is applied to the mobile body control system as shown in Fig. 1, like in the case of the first embodiment, and has a hardware configuration as shown in Fig. 2. Therefore, the training unit 218 can also be implemented as a function of the processor 210 shown in Fig. 2, just like other functional blocks.

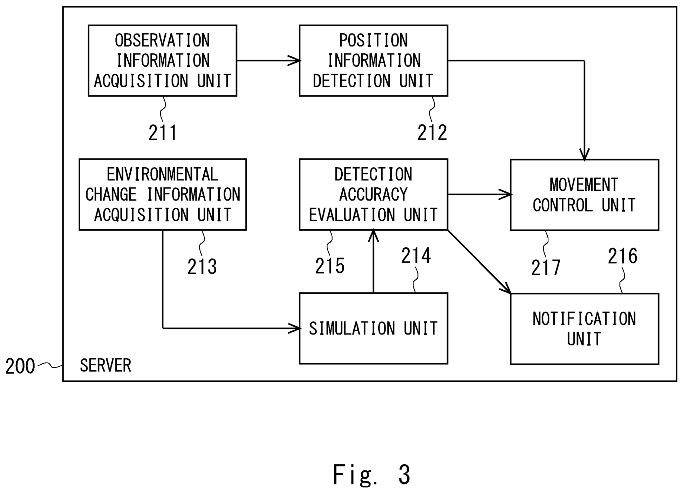

While not shown in Fig. 6, in the second embodiment as well, the server 200 can include the notification unit 216 and the movement control unit 217 shown in Fig. 3.

Since the configurations of the observation information acquisition unit 211, the environmental change information acquisition unit 213, and the simulation unit 214 are the same as those in the first embodiment, the descriptions thereof will be omitted.

The position information detection unit 212 in this embodiment is different from that in the first embodiment in that a detection model is trained by the training unit 218.

Further, the detection accuracy evaluation unit 215 in this embodiment is different from that in the first embodiment in that the detection accuracy evaluation unit 215 in this embodiment outputs the results of evaluating the detection accuracy to the training unit 218.

The training unit 218 trains the artificial intelligence model. More specifically, the training unit 218 according to this embodiment trains the detection model used at a timing when the position information detection unit 212 extracts the exterior of the vehicle 100 from observation information.

The training unit 218 acquires the results of evaluating the accuracy of detecting the position information from the detection accuracy evaluation unit 215. The training unit 218 determines the training frequency based on the acquired evaluation results. Then the training unit 218 according to this embodiment trains the aforementioned detection model at the training frequency determined based on the results of evaluating the accuracy of detecting the position information.

According to the above-described configuration, with the position detection system according to this embodiment, it is possible to reduce the cost required to train the artificial intelligence while improving the accuracy of detecting the position information.

### (Operation of Position Detection System)

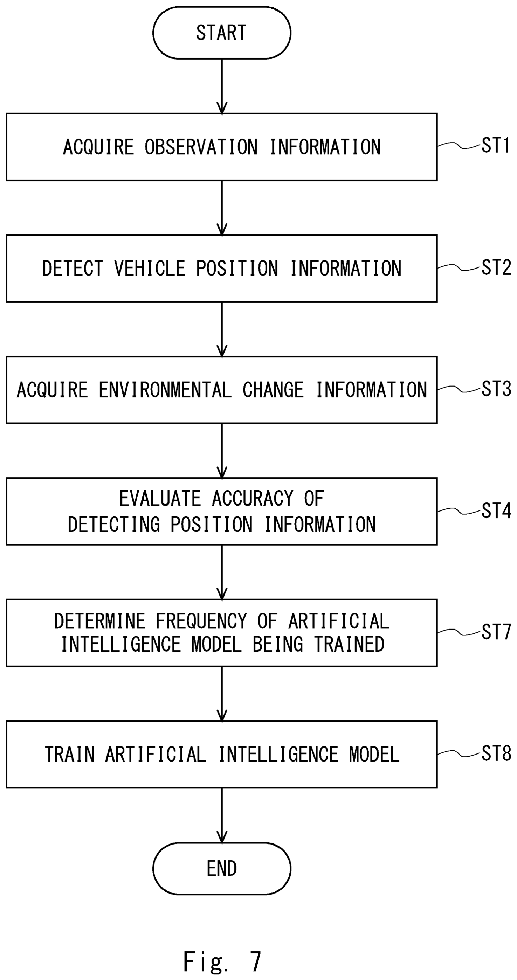

Next, an operation of the position detection system, that is, a position detection method according to the second embodiment will be described in detail. Fig. 7 is a flowchart showing an operation of the position detection system according to the second embodiment. In the following description, Figs. 1-6 are referred to as appropriate.

Since the operations from Step ST1 to Step ST4 are similar to those in the first embodiment, the descriptions thereof will be omitted. In Step ST7 in Fig. 7, the processor 210 determines the frequency of the artificial intelligence model being trained. That is, in Step ST7, the processor 210 functions as the training unit 218.

Next, the processor 210 trains the artificial intelligence model (Step ST8). That is, in Step ST7, the processor 210 functions as the training unit 218.

More specifically, in Step ST8, the processor 210 trains the detection model of the exterior of the vehicle 100 at the training frequency determined in Step ST7.

As described above, the position detection system according to this embodiment determines the training frequency based on the results of evaluating the accuracy of detecting the position information, and trains the artificial intelligence model at the determined training frequency.

According to the above configuration, with the position detection system according to this embodiment, it is possible to reduce the cost required to train the artificial intelligence while improving the accuracy of detecting the position information.

### (Another First Embodiment)

In the above-described first embodiment, the server 200 performs processing from acquisition of vehicle position information to generation of a travel control signal. On the other hand, at last a part of the processing from the acquisition of the vehicle position information to the generation of the travel control signal may be performed by the vehicle 100. For example, the following forms (1) to (3) may be employed.
(1) The server 200 may detect vehicle position information, determine the target position that the vehicle 100 should go next, and generate a route from the current position of the vehicle 100 indicated in the detected vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators using the generated travel control signal.
(2) The server 200 may detect vehicle position information and transmit the detected vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators using the generated travel control signal.
(3) In the forms of the above (1) and (2), an internal sensor may be mounted on the vehicle 100, and results of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the results of the detection in the internal sensor and reflect the results of the detection in the internal sensor in the route when the route is generated. In the form of the above (1), the vehicle 100 may acquire the results of the detection in the internal sensor and reflect the results of the detection in the internal sensor in a travel control signal when the travel control signal is generated. In the form of the above (2), the vehicle 100 may acquire the results of the detection in the internal sensor, and reflect the results of the detection in the internal sensor in the route when the route is generated. In the form of the above (2), the vehicle 100 may acquire the results of the detection in the internal sensor, and reflect the results of the detection in the internal sensor in the travel control signal when the travel control signal is generated.

### (Another Second Embodiment)

In the above-described first embodiment, an internal sensor may be mounted on the vehicle 100. Then, the vehicle control apparatus may acquire detection results in the internal sensor, detects current position information of the vehicle 100 based on the acquired detection results, and outputs control parameters based on the detected current position information. That is, the position detection system according to the present disclosure may be a system mounted on the vehicle 100.

### (Another Third Embodiment)

In the above-described first embodiment, control parameters may be output based on both detection results in the internal sensor and detection results in the external sensor.

In each of the above embodiments, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus and the actuators in order to exert three functions of "run", "turn", and "stop" by unmanned driving. In a case where the vehicle 100 externally acquires information for unmanned driving, the vehicle 100 may further include a communication apparatus. That is, the vehicle 100 that can move by unmanned driving may not be provided with at least some of internal components such as a driving seat or a dashboard, at least some of external components such as a bumper or a fender, or a body shell. In this case, before the vehicle 100 is shipped from the factory, the other components such as a body shell may be mounted on the vehicle 100, or the other components such as the body shell may be mounted on the vehicle 100 after the vehicle 100 is shipped from the factory in a state in which the other components such as the body shell are not mounted on the vehicle 100.

Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the above-described embodiments.

Further, in this case, the vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

As described above, when the operation of vehicles 100 in the form of the platform is controlled, manufacturing work such as assembling of parts, switch operations, welding, inspection, and so on may be performed on the vehicles 100 which are traveling based on the control by the position detection system according to the present disclosure. That is, a plurality of vehicles that move in a form of a platoon based on control information may be manufactured by performing manufacturing work on these vehicles.

With the position detection system according to the present disclosure, the accuracy of detecting the position information of the mobile body can be improved, as a result of which the accuracy of controlling movement of the mobile body can be improved. Therefore, the position detection system according to the present disclosure is introduced into the aforementioned vehicle manufacturing process, whereby it is possible to stably supply vehicles to a predetermined position where the next manufacturing work is performed. As a result, with the position detection system according to the present disclosure, the vehicle manufacturing efficiency can be improved. The aforementioned manufacturing method may be referred to as a method for manufacturing a mobile body according to the present disclosure.

### (Supplements)

Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

While the present invention has been described in view of the aforementioned embodiments, the present invention is not limited to the configurations in the above-described embodiments. As a matter of course, the present invention includes various changes, modifications, and combinations that one skilled in the art might make within the scope of the invention as set forth in claims of the present application.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A position detection system comprising:
an observation information acquisition unit (211) configured to acquire observation information, which is a result of observing a movement area where a mobile body moves;
a position information detection unit (212) configured to detect position information of the mobile body based on the observation information;
an environmental change information acquisition unit (213) configured to acquire environmental change information regarding a change in an environment of the movement area; and
a detection accuracy evaluation unit (215) configured to evaluate an accuracy of detecting the position information based on the environmental change information and output an evaluation result.

2. The position detection system according to claim 1, further comprising
a simulation unit (214) configured to create simulation data of the observation information by simulating the movement area after the environment has been changed and the mobile body that moves in the movement area based on the environmental change information,
wherein the detection accuracy evaluation unit (215) evaluates the accuracy of detecting the position information by referring to position information of the mobile body detected based on the simulation data.

3. The position detection system according to claim 1 or 2, further comprising a notification unit (216) configured to notify a user of a result of evaluating the accuracy of detecting the position information.

4. The position detection system according to claim 1 or 2, further comprising a movement control unit (217) configured to control movement of the mobile body based on the position information and a result of evaluating the accuracy of detecting the position information.

5. The position detection system according to claim 4, wherein, when the result of evaluating the accuracy of detecting the position information does not satisfy a predetermined condition, the movement control unit (217) stops movement of the mobile body.

6. The position detection system according to claim 1 or 2, wherein the position information detection unit (212) detects position information of the mobile body by inputting the acquired observation information to an artificial intelligence model that outputs position information of the mobile body by using the observation information as input information.

7. The position detection system according to claim 6, further comprising:
a training unit (218) configured to train the artificial intelligence model,
wherein the training unit (218) determines a training frequency based on the result of evaluating the accuracy of detecting the position information.

8. The position detection system according to claim 1 or 2, wherein the environmental change information acquisition unit (213) acquires a plan for changing a layout of the movement area as the environmental change information.

9. The position detection system according to claim 1 or 2, wherein the environmental change information acquisition unit (213) detects the change in the environment of the movement area based on the observation information.

10. A position detection apparatus comprising:
an observation information acquisition unit (211) configured to acquire observation information, which is a result of observing a movement area where a mobile body moves;
a position information detection unit (212) configured to detect position information of the mobile body based on the observation information;
an environmental change information acquisition unit (213) configured to acquire environmental change information regarding a change in an environment of the movement area; and
a detection accuracy evaluation unit (215) configured to evaluate an accuracy of detecting the position information based on the environmental change information.

11. A position detection method comprising:
acquiring observation information, which is a result of observing a movement area where a mobile body moves;
detecting position information of the mobile body based on the observation information;
acquiring environmental change information regarding a change in an environment of the movement area; and
evaluating an accuracy of detecting the position information based on the environmental change information.

12. A position detection program for causing a computer to execute an operation comprising:
acquiring observation information, which is a result of observing a movement area where a mobile body moves;
detecting position information of the mobile body based on the observation information;
acquiring environmental change information regarding a change in an environment of the movement area; and
evaluating an accuracy of detecting the position information based on the environmental change information.

13. A method for manufacturing a mobile body, the method comprising:
acquiring observation information, which is a result of observing a movement area where a mobile body moves;
detecting position information of the mobile body based on the observation information;
acquiring environmental change information regarding a change in an environment of the movement area;
evaluating an accuracy of detecting the position information based on the environmental change information; and
controlling the mobile body, based on the detected position information and a result of evaluating the accuracy of detecting the position information, in such a way that the mobile body moves to a predetermined position where a next manufacturing process is performed.
